# EUROPEAN PATENT SPECIFICATION

(11) **EP 2 417 743 B1**
(45) Date of publication and mention of the grant of the patent: **05.06.2019**
(21) Application number: 09843131.5
(22) Date of filing: 27.11.2009
(51) Int. Cl.: H04L 29/06, H04N 7/173, H04N 21/2343, H04N 21/845, H04N 21/854, H04N 21/8541

(54) **METHODS AND ARRANGEMENTS FOR CREATING AND HANDLING MEDIA FILES**
VERFAHREN UND ANORDNUNGEN ZUR ERSTELLUNG UND HANDHABUNG VON MEDIENDATEIEN
PROCEDES ET DISPOSITIFS POUR LA CREATION ET LA GESTION DE FICHIERS MULTIMEDIA

(30) Priority: 09.04.2009 US 167927 P
(43) Date of publication of application: 15.02.2012
(73) Proprietor: Telefonaktiebolaget LM Ericsson (publ), 164 83 Stockholm (SE)
(72) Inventor: PRIDDLE, Clinton, Indooroopilly 4068 (AU); FRÖJDH, Per, S-11343 Stockholm (SE); EINARSSON, Torbjörn, S-112 40 Stockholm (SE)
(74) Representative: Brann AB
(86) International application number: PCT/SE2009/051347
(87) International publication number: WO 2010/117316

(56) References cited:
- EP-A2- 1 519 587
- WO-A1-03/098475
- WO-A1-03/098475
- US-A1- 2005 086 582
- US-A1- 2006 136 457
- US-A1- 2008 307 483
- PER FRÃJDH ET AL: "Adaptive Progressive Download", 88. MPEG MEETING; 20-4-2009 - 24-4-2009; MAUI; (MOTION PICTURE EXPERT GROUP OR ISO/IEC JTC1/SC29/WG11),, no. M16392, 17 April 2009 (2009-04-17), XP030044989,
- Alex Zambelli: "IIS Smooth Streaming Technical Overview", , 31 March 2009 (2009-03-31), XP055009366, Retrieved from the Internet: URL:http://img.prodek.lt/documents/IIS_Smo oth_Streaming_Technical_Overview.pdf [retrieved on 2011-10-12]
- '3rd Generation Partnership Project; Technical Specification Group Services and System Aspects; Transparent end-to-end Packet-switched Streaming Service (PSS); 3GPP file format (3GP) (Release 8)' 3GPP STANDARD; 3GPP TS 26.244 December 2008, pages 1 - 52, XP050370198
- TELEFON AB LM ERICSSON ET AL: 'Alternative movie fragments for adaptation' 3GPP DRAFT; TSG-SA4#56 MEETING TDOC S4 (09)0848 09 November 2009 - 13 November 2009, SOPHIA ANTIPOLIS, FRANCE, XP050398978
- TELEFON AB LM ERICSSON ET AL: 'HTTP Streaming using standard PSS clients' 3GPP DRAFT; 3GPP TSG-SA4 MEETING #56; S4-091003 09 November 2009 - 13 November 2009, SOPHIA ANTIPOLIS, FRANCE, XP050399102
- ANONYMOUS: "QuickTime file Format", INTERNET CITATION, March 2001 (2001-03), XP002311281, Retrieved from the Internet: URL:http://developer.apple.com/documentati on/ QuickTime/QTFF [retrieved on 2004-12-16]

## Description

### TECHNICAL FIELD OF THE INVENTION

The claimed invention relates to methods and arrangements for creating and handling media files comprising alternative movie fragments.

### BACKGROUND OF THE INVENTION

Depending on the file format used, a file may be more or less suitable for streaming, especially when dynamic adaptation is required in the network.

In ISO/IEC 14496-12:2008, Information technology-Coding of audio-visual objects-Part 12: ISO base media file format (3^{rd} Edition), the Moving Picture Experts Group (MPEG) has standardized the ISO base media file format, which specifies a general file format that serves as a base to a number of more specific file formats, such as the MP4 and 3GP file formats. More on these formats can be found in ISO/IEC 14496-14:2003, Information technology-Coding of audio-visual objects-Part 14: MP4 file format, and 3GPP TS 26.244, Transparent end-to-end Packet-switched Streaming Service (PSS), 3GPP File Format (3GP), Release 8 (2008), respectively.

The standardized file structure is object-oriented and a file is formed by a series of objects called boxes, where the structure of a box is inferred by its type. Whereas some boxes only contain other boxes, most boxes contain data. All data of a file is contained in boxes.

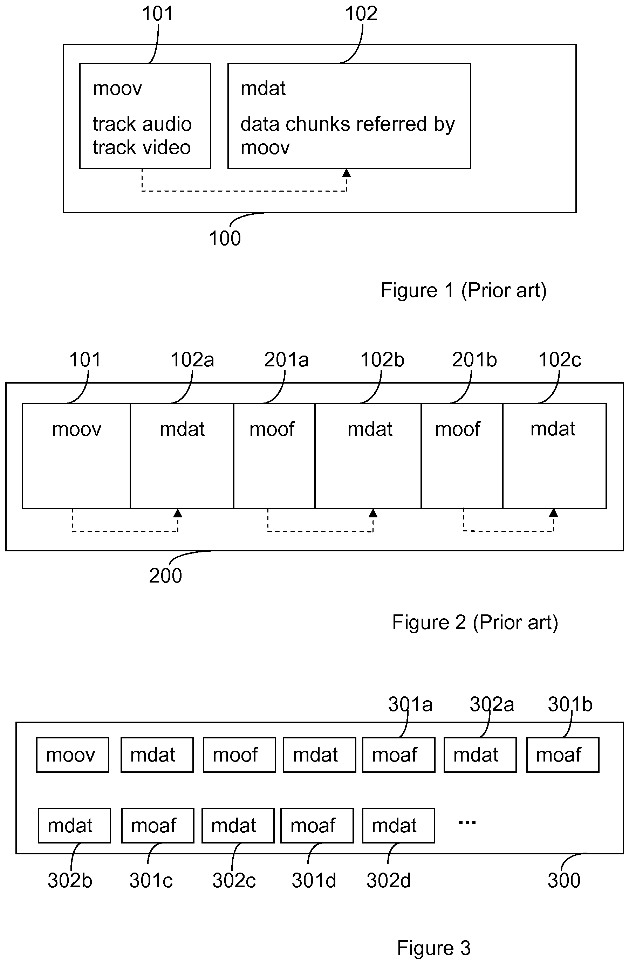

Figure 1 is a schematic figure of an un-fragmented file 100 according to the prior art. A file can be divided into an initial movie, comprising the entire presentation of the file, which is contained in a movie box of type 'moov' 101, while the bit streams of the file, i.e. the actual media data comprising, data chunks, are contained in a media-data box of type 'mdat' 102. The media data may typically be divided into different tracks of compressed data, such as e.g. compressed audio and video bitstreams. As indicated with the dotted arrow 'mdat' is referred to by 'moov'.

A typical media file also comprises a number of incremental movie fragments, contained in movie fragment boxes of type 'moof'. By also using movie fragments it is possible to reduce the initial delay before play-out can start at a client, since, without fragments, all meta-data must be contained in 'moov' which adds overhead before 'mdat' in the file. Another aspect of using fragmented files which needs to be considered is that this type of files can in principle be endless, since it is always possible to add another movie fragment to a file.

Figure 2 is another schematic figure, illustrating a fragmented file according to the prior art. The presentation is contained in 'moov' 101 and a number of 'moof' 201a, 201b with corresponding bit streams in 'mdat' 102a, 102b, 102c. As indicated in figure 2, mdat 102a is referred to by 'moov' 101, while 'mdat 102b' is referred to by 'moof' 201a and 'mdat 103c' is referred to by 'moof, 201b. For simplicity reasons the figure only contains two fragments, while a typical file contains only a short, or even empty, 'moov', followed by many fragments. Each movie fragment extends the movie, i.e. the multimedia presentation, of a file in time. The movie box and the movie fragment boxes are meta-data boxes containing the information needed by a client to decode and render the media presentation of a file. All these boxes ('moov', 'moof', and 'mdat') are top-level boxes, i.e. contained by the file only and not by any other boxes.

A file can be optimized for progressive download by i) formatting it, such that 'moov' proceeds 'mdat', and ii) interleaving media data in 'mdat', such that audio and video corresponding to a common time interval of e.g., one second's duration, is stored contiguously. By also using movie fragments it is possible to reduce the initial delay before playout can start. Without fragments, all metadata must be contained in 'moov' which adds overhead before 'mdat' in the file.

Microsoft Smooth Streaming is an extension to Microsoft Silverlight which is specifically designed for adaptive HTTP streaming, and which is built on the ISO base media file format and the idea that a media file may be split into many pieces, each of which can be considered as small files, and that these pieces are combined to make a new file.

A client may basically request a piece from a specific file at a certain point of time and join these together to make a media sequence.

The ISO base media file format is very strict when it comes to the content of movie fragments and movie boxes. During progressive download, for example, it is not possible to re-encode content in a fragment without basically first rewriting the entire fragment.

In addition, Microsoft Smooth Streaming is not backwards compatible with existing file readers. It therefore requires an intelligent client and, thus, the described functionality can therefore not be added transparently to an existing service.

Movie fragments may be used as the main building blocks both for distribution of live and adaptive content to a client. As already mentioned above, movie fragments are already part of the 3GP media file format by inheritance from the ISO based media file format.

Movie fragments make it possible to distribute meta-data into multiple data chunks and thereby to avoid the need for a client to have full knowledge of the media file structure of a media file at the start of playing the file.

As long as a 3GP media file is delivered as a sequence of movie fragments, these fragments can be created live during the transmission, and/or chosen between different versions having different bitrates. The latter choice allows for adaptivity, whereby the server can trigger the adaptivity by monitoring TCP delivery of data provided towards the client.

Seeking in ISO/3GP files depends on the structure of the media files. Without movie fragments, seeking is a table-based procedure which is typically relatively easy to perform. However, if the media files contain movie fragments, seeking specific positions in a media file is more difficult, since during seeking it is normally only possible to move one movie fragment ahead at a time. This is due to the fact that in order for a file reading entity, typically a server, to find the start of a subsequent fragment, the length of a fragment presently being processed need to be known. If a media file is limited in size, a movie fragment random access box, typically referred to as an 'mfra' can be added in the end of the media file, to help out in locating Random Access Points (RAPs). This information does however not assist in finding the movie fragment boxes of the file.

The smooth streaming process described above is completely client controlled, where a client first downloads a manifest media file and then fetches ISO base media file fragments one at a time and builds a continuous media stream from these fragments. Such a scheme allows for adaptivity and seeking, but only for stored files. In addition, the seeking requires the manifest media file to give a mapping between time instances and fragment numbers.

The smooth streaming process detailed above is described in the prior art document "IIS Smooth Streaming Technical Overview" by Alex Zambelli.

Document WO 03/098475A1 describes the storage and retrieval of audiovisual content in a multimedia file format and particularly to file formats compatible with the ISO media file format. One or more descriptions pertaining to multimedia data are identified and included into supplemental enhancement information (SEI) associated with the multimedia data. Subsequently, the SEI containing the descriptions is transmitted to a decoding system for optional use in decoding of the multimedia data.

### SUMMARY

The scope of the present invention is defined by the appended claims. It is an object of the present invention to address at least some of the problems outlined above.

It is also an object to provide a mechanism which enables adaptive selection of fragments at a file reading entity. The required selection mechanism may be obtained by applying a mechanism which allows for alternative movie fragments to be added to a media file by a file creating entity and which allows for such files to be handled by a file reading entity, such as a server or a client.

### BRIEF DESCRIPTION OF THE DRAWINGS

The present invention will now be described in more detail and with reference to the embodiments and the drawings, of which:
- Figure 1 is a schematic illustration of a media file comprising no fragments, according to the prior art.
- Figure 2 is another schematic illustration of a media file comprising fragments, according to the prior art.
- Figure 3 is yet another schematic illustration of a media file comprising fragments, including alternative fragments.
- Figure 4 is a flow chart illustrating a method of a content creating entity for creating a fragmented media file comprising alternative media fragments.
- Figure 5 is another flow chart illustrating another method of a file reading entity for handling a media file obtained from a file creating entity.
- Figure 6 is yet another flow chart illustrating yet another method of another file reading entity for handling a media file obtained from a file creating entity.
- Figure 7 is a simplified block diagram illustrating a file creating entity according to one exemplified embodiment.
- Figure 8 is a simplified block diagram illustrating a file reading entity configured as a server.
- Figure 9 is another simplified block diagram illustrating another file reading entity configured as a client.
- Figure 10 is an overview illustrating a hierarchical box Structure configured according to one exemplifying embodiment.
- Figure 11 is a schematic scenario illustrating a client initiated request being processed by a server.
- Figure 12 is another simplified block diagram illustrating a server which is further adapted to process a request provided by a client.
- Figure 13 is yet another simplified block diagram illustrating a client which is adapted to initiate a request to a server, such as the one described with reference to figure 12.
- Figure 14a is an illustration of an exemplified media file which may be delivered as a result from a seeking process.
- Figure 14b is another illustration of an exemplified media file which has been adapted to allow change of coded at a client.

### DETAILED DESCRIPTION

The present document refers to methods and arrangements which enables multiple, alternative movie fragments to be generated and included into a single media file which is suitable for HTTP streaming with adaptive progressive download. In addition, methods and arrangements for handling such media files in an entity, from hereinafter referred to as a file reading entity, which is adapted to obtain this type of media files from a file creating entity are also described.

Through out this document the term file is to be referred to as a media file or multimedia file, which may contain one or more tracks of content, such as e.g. one or more video tracks and/or one or more audio tracks.

According to the claimed embodiments which will be described in further detail below, a file reading entity configured as a server or client which has not been configured to identify alternative movie fragments will simply select the received default movie fragments, whereas any alternative movie fragments will be ignored. This feature will be achieved without requiring any modification to existing servers or clients, which are capable of handling media files according to the ISO base media file format. Thereby backward compatibility will be obtained, for this type of servers and clients, as well as for any other type of entity which are configured to handle media files of the ISO base media file format.

However, a server or client that has been configured to adaptively select fragments will for each fragment for which there exist at least one alternative movie fragment in addition to an associated default movie fragment have a choice of either selecting the default movie fragment or any available alternative movie fragments, while all the non-selected movie fragments will be removed from the file in case of a server configuration, while in case of a client configuration non-selected movie fragments will be ignored. More specifically, any client or terminal which understands the syntax used for the media file will be able to adaptively select optional, alternative fragments in order to adapt to local situations, such as e.g. terminal and/or display capabilities, file content, or network dependent issues.

The invention is implemented, using the concept of alternative movie fragments. One specific exemplary scenario where alternative movie fragments may be applied is e.g. when content is encoded into a media file at different bitrates. Bit rate adaptation may be useful as a tool for avoiding congestion over a bandwidth-limited transport channel, as well as for providing client-capability adaptation.

Throughout this document, movie fragments may also be referred to as default movie fragments, since the movie fragment is the only option in case of no alternative movie fragments. In addition, if the entity in which a fragmented media file is to be handled in some way is not adapted to either recognize of handle alternative movie fragments, it is the movie fragments, or default movie fragments, which are going to be handled accordingly by the entity.

Other factors that can be considered for adaptively selecting movie fragments are when alternative movie fragments of different frame rates are used. Yet another aspect may be to provide different alternative fragments dependent on the content of a media file, such that a server or a client may e.g. have the option to select to switch from a full multimedia service, to a limited service, where e.g. only text is distributed. In addition, media fragments may be divided into different branches, wherein these branches may be used as a basis for selecting fragments.

The suggested adaptive fragment selection concept is realized by extending the ISO based box structure mentioned above, by introducing at least one new box type, from hereinafter referred to as an alternative movie fragment box, or 'moaf'. The 'moaf' is contained in a file, and for each movie fragment box, or 'moof', the file may comprise either none, or one or more associated alternative movie fragment boxes.

Alternative movie fragment boxes provide an alternative extension to the presentation other than the co-located movie fragment. Alternative movie fragments also extends the presentation time in the same way a movie fragment box does and contain the same child boxes, i.e. boxes which may be contained in an alternative movie fragment box, as if they had been placed in the file only as a single movie fragment box. In particular, this means that Movie Fragment Header boxes 'mfhd' and Track Fragment boxes 'traf', which are typically contained in movie fragment boxes, and all their contained boxes, according to ISO, can be contained in alternative movie fragment boxes as well.

A movie fragment and one or more associated alternative movie fragments are typically identified as alternatives to each other by allotting them the same sequence number. According to one exemplary embodiment, the sequence number can be contained in the movie fragment header box 'mfhd' .

To exemplify, the syntax for an alternative movie fragment box may be as follows.

```
                  aligned(8) class AlternativeMovieFragmentBox
                           extends Box ('moaf') {
                  }
```

Figure 3 is a schematic illustration of a fragmented file 300, comprising a plurality of alternative movie fragments, each of which have been contained in respective alternative movie fragment boxes. In figure 3 the first row of boxes is continued by the second row.

The difference from the file illustrated in Figure 2 is that each movie fragment box, 'moof' in figure 3 may be accompanied by zero or more alternative movie fragment boxes 'moaf' 301a, 301b, 301c, 301d and a corresponding meta-data box 'mdat' 302a, 302b,302c,302d. There is no restriction on how many 'mdat' one should use, but a typical file contains one 'mdat' per 'moof' or 'moaf'.

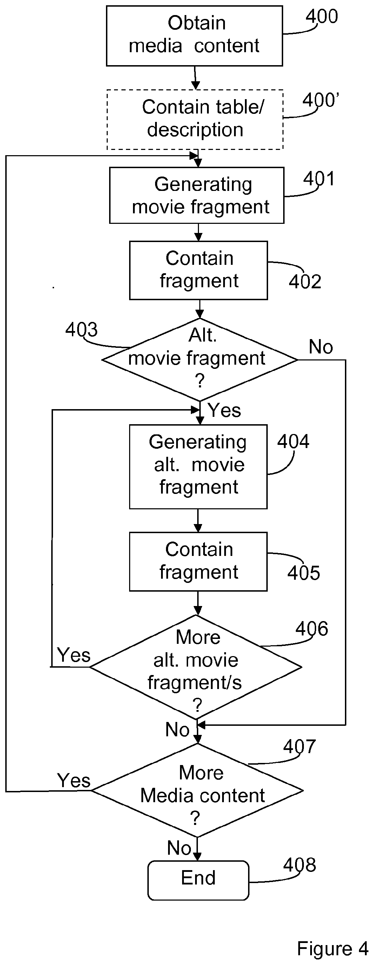

A method for providing a fragmented media file suitable for HTTP streaming with progressive downloading by a server and/or a client from a content creating entity will now be described below with reference to figure 4. The suggested method describes how a media file may be assembled, by adaptively adding none, one or a plurality of alternative movie fragments fragment by fragment. Once assembled, such a media file may be stored for later retrieval by a file reading entity, such as e.g. a server or a client.

In a first step 400, the content creating entity is obtaining movie content from one or more media sources. In a next optional step 400' information which is descriptive for the media content and the file is first contained into the file in the form of a table and/or a description.

In a next step 401 a movie fragment is generated on the basis of a first part of the provided content, and the movie fragment is contained into a respective box, as indicated with a next step 402. Once the conventional movie fragment has been generated and contained it is determined whether also one or more alternative movie fragments are to be inserted into the file, according to some pre-defined criteria, by processing steps 403-406 for each respective movie fragment. If one or more alternative movie fragments are to be applied for a movie fragment, an alternative movie fragment is generated in step 404, and in a subsequent step 405, also the alternative movie fragment is contained into a box, which is dedicated for containing alternative movie fragments. In the present document such a box will be referred to as an alternative movie fragment box, or 'moaf'. Each movie fragment and alternative movie fragment are contained into a respective box of a hierarchical box structure, which is organized in such a way that a file reading entity, typically a client or a server, which is acquiring the media file will be able to identity, not only each default movie fragment, but also each alternative movie fragment.

As indicated with a subsequent step 406, steps 404 and 405 are repeated until each required alternative has been covered for the recently generated movie fragment, and, thus, until all alternative movie fragments associated with a respective movie fragment have been generated and contained into the file, and in another step 407 it is determined whether there is any more media content to be contained into the file, and, thus, if the procedure is to be repeated by generating any additional movie fragments, starting at step 401, or whether all media content has been contained into the file, and, thus, whether the process can be terminated as indicated in a final step 408.

One or more attributes may be used for providing information for enabling a later identification. For this purpose a movie fragment information box, which in the present context is referred to as 'mofi' is suggested. 'mofi' can be contained in movie fragment boxes and in alternative movie fragment boxes. According to one embodiment, the attributes attribute_name and attribute_value may be used as descriptive attributes and differentiating criteria for fragments for which there are alternatives.

To exemplify, the syntax for a movie fragment information box may be described as follows.

```
                  aligned(8) class MovieFragmentInformationBox
                     extends FullBox ('mofi', version = 0, 0) {
                     unsigned int(32) entry_count;
                     int i;
                     for (i=0; i < entry_count; i++) {
                         unsigned int(32) attribute_name;
                         unsigned int(32) attribute_value;
                                                    }
```

To exemplify, a bitrate attribute may e.g. describe the total size of samples in a movie fragment divided by the duration in the fragment.

In addition, an alternative movie fragment indication box, here referred to as 'amfi' is suggested, for the purpose of warning a file reading entity that there may be alternative movie fragment boxes in the media file. 'amfi', which may be contained in the 'mvex' boxes, may have the following syntax:

```
                  aligned(8) class
                  AlternativeMovieFragmentIndicationBox extends
                  Box ('amfi') {
                  }
```

In addition, in case movie fragments are divided into different branches when the file is created, another box, referred to as an alternative movie fragment header box, or 'amfh' may also be used. The alternative move fragment header box contains a branch identity (branch ID), which is used for identifying those alternative movie fragments which constitute a specific branch. If the alternative move fragment header box is omitted branch ID may e.g. be considered to be 1 by default. According to the present example 'amfi' may be contained in the 'moof' and 'moaf' boxes, and may have the following syntax:

```
                  aligned(8) class
                  AlternativeMovieFragmentHeaderBox
                           extends FullBox ('amfh', 0, 0) {
                  unsigned int(16) branch_ID;
                  }
```

A media file assembled according to the method described above may typically be stored in any type of suitable storage means from where it can be obtain from a server or client whenever required. The file format, which will be described in further detail below, is particularly suitable for HTTP streaming with progressive downloading.

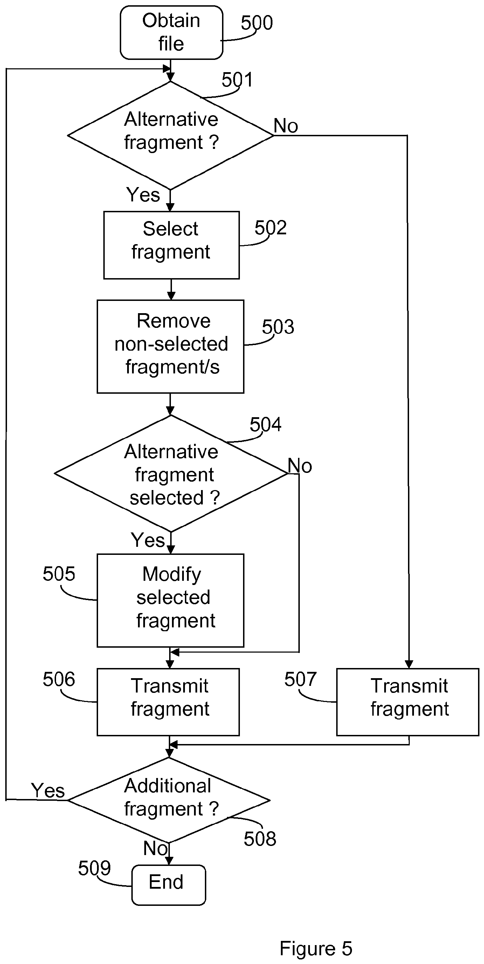

A method which enables an entity, which may be referred to as a file reading entity, to handle a fragmented file during HTTP streaming with progressive downloading to another file reading entity will now be describe in more detail with reference to figure 5. In the present example the file reading entity is exemplified with a server.

According to figure 5, the suggested method starts in a first step 500, by the server obtaining a fragmented media file from a file creating entity. In a next step 501, it is determined whether there is any subsequent alternative movie fragment present in the file for the received movie fragment, i.e. if any alternative movie fragments can be identified by the server. If this is the case the server selects either the movie fragment, or any of the one or more associated alternative movie fragments, as indicated with a step 502. The selection may be based on one pre-defined selection criterion alone or on a combination of pre-defined selection criteria. As already mentioned above, the selection may e.g. be based on the available bit rate and/or frame rate, and/or on the content of a file.

When a movie fragment or alternative movie fragment has been selected, the remaining associated movie fragments/alternative movie fragments, i.e. all non-selected associated movie fragments are removed from the file, as indicated with another step 503.

If an alternative movie fragment was selected, as checked in step 504, this movie fragment is modified in a step 505, such that the movie fragment is renamed so that it can later be identified as a default movie fragment. With the box types mentioned above, such a renaming would result in a renaming of a 'moaf' type fragment to a 'moof' type fragment. The described modification step assures backwards compatibility for any client or any other file reading entity which will later receive and process the media file, since from the clients point of view, it will only receive movie fragments of a known format, namely, a 'moov' followed by one or more 'mdat' and 'moof', just as if no alternative movie fragments existed. In a subsequent step 506, the selected movie fragment/alternative movie fragment is transmitted to other file reading entities, such as e.g. clients.

If in step 501 it is instead determined that no alternative movie fragments follow after a certain movie fragment, the movie fragment for which there is no alternative options is instead transmitted to a respective file reading entity without requiring any modification, as indicated with step 507.

As indicated with a subsequent step 508 the described procedure is repeated until there is no more movie fragment or alternative movie fragment left to evaluate and transmit in the file, and the process terminates, as indicated with a final step 509.

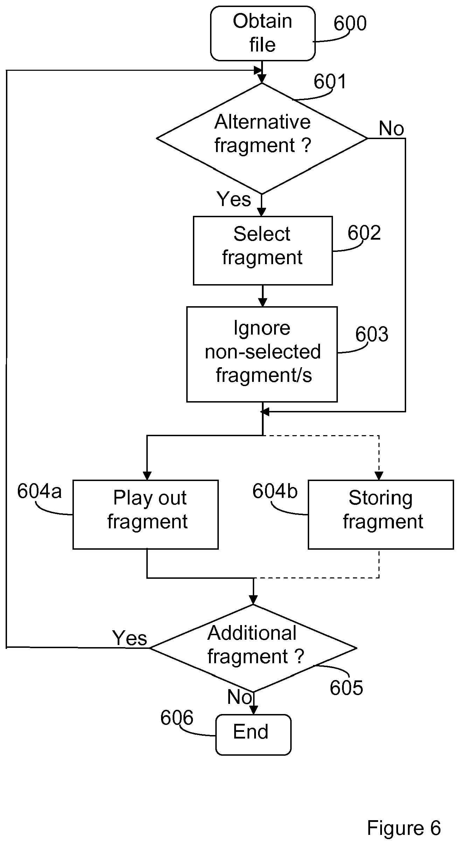

Another method which instead enables the media content of a fragmented media file comprising alternative movie fragments to be played out will now be described with reference to figure 6. This method is executed on a client, which is configured to adaptively select fragments according to some pre-defined criteria.

According to figure 6, the media file is obtained either from a file creating entity or from another content reading entity, such as e.g. a server in a first step. In another step 601, the client determines whether there is any alternative fragment associated with a received movie fragment, i.e. any alternative movie fragment is identified.

If one or more alternative movie fragments are identified in step 601 a fragment is selected in a step 602, while all the associated non-selected movie fragments are ignored by the client, as indicated with another step 603. In a further step 604a the selected fragment is played out and possibly also stored, as indicated with another step 604b, which is to be considered as an optional step. Alternatively, the client may be configured such that it is only storing the media file, without playing out the content, and in such a case only step 604b will be executed. The latter case may be used by a client having the function of an intermediate unit, which comprises a conventional server function, for enabling another client later access to the stored file.

As indicated with a step 605, the described process for handling any additional alternative fragments is then repeated, until all fragments of the obtained movie file have been processed accordingly, where the process is terminated, as indicated with a final step 606.

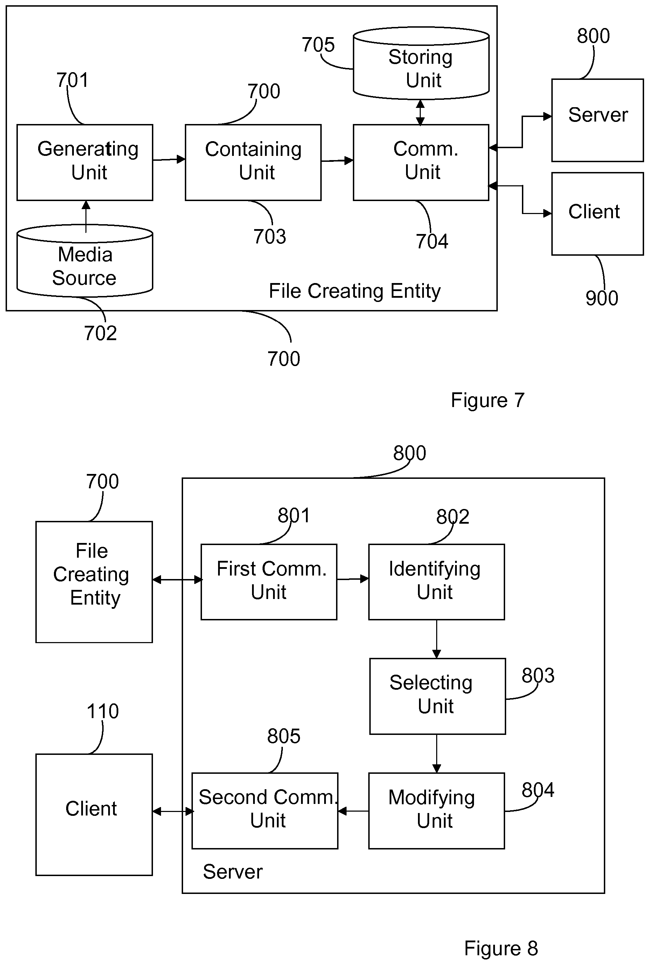

A file creating entity which is suitable for providing a fragmented media file, which may comprise one or more alternative movie fragments, to a file reading entity, will now be described with reference to figure 7.

The file creating entity 700 comprises a generating unit 701, adapted to generate a file according to the file format and the hierarchical box structure referred to above, i.e. a file which may comprise alternative movie fragments, on the basis of content provided from one or more media sources, here represented by media source 702. The file creating entity 700 also comprises a containing unit 703, adapted to contain each generated alternative movie fragment, as well as any other content, which has been processed in a conventional manner, into a hierarchical box structure, according to any of the embodiments described above. The containing unit 703 is further adapted to provide the boxes, and the media file, carrying the contained information, to a communication unit 704. From where a file reading entity, here represented by server 800 and client 900, can obtain the media file. File creating entity 700 typically also comprises a separate Storing Unit 705, where the media file can be stored for later retrieval. Although not explicitly shown in figure 7, it is to be understood that in a typical scenario a client 900 configured to adaptively select alternative fragments of a media file, may obtain the file via a conventional server, i.e. a server which does not comprise functionality for modifying a media file comprising alternative movie fragments.

The containing unit 703 may further be adapted to contain some type of indication or instruction that a generated media file may contain alternative movie fragments. Furthermore, if fragments are to be identifiable by branch identities or sequence numbers, the generating unit 703 may be configured to allot a sequence number or a branch identity to alternative movie fragment and the associated movie fragment.

A file reading entity configured as a server, according to one exemplary embodiment, which is suitable for executing the method described above will now be described in further detail below with reference to figure 8.

The server 800 comprises a first communication unit 801, which is adapted to obtain a file which comprises one or more alternative movie fragments from a file creating entity 700. The first communication unit 801 is connected to an identifying unit 802, which is adapted to determine whether there are any alternative movie fragment/s associated with a movie fragment of the obtained media file, by identifying such alternative movie fragments. Such an identification process may be achieved e.g. by consulting the fragment header box for corresponding sequence numbers. Alternatively, identifying unit 802 may be adapted to recognize the occurrence of alternative movie fragments by consulting an alternative movie fragment indication box, contained in the movie extends box. The server 800 also comprises a selection unit 803, adapted to select from selectable movie fragments/alternative movie fragments according to pre-defined selection criteria, and to remove any un-selected associated fragment/s from the media file.

In addition, server 800 comprises logic for modifying a selected alternative movie fragment, typically by modifying the name of the fragment, such that it can later be identified by another file reading entity as a conventional movie fragment. According to the exemplified embodiment, this is achieved by modifying unit 804. The modifying unit 804 is connected to a second communication unit 805 which is adapted to transmit any selected fragment, to one or more clients, in the figure represented by the conventional client 110. Because of the described processing of the media file, the media file as obtained by client 110 will be interpreted as a standardized media file.

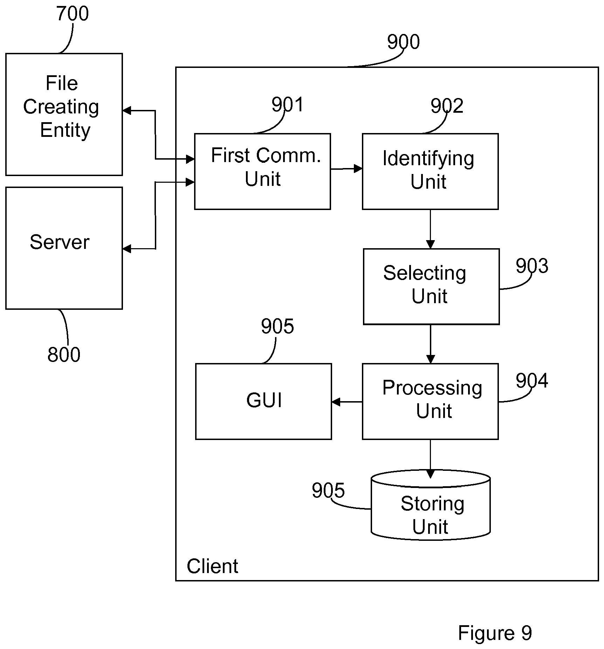

As already indicated above a conventional client will be able to obtain and handle a media file comprising alternative media fragments. However, in order to be able to adaptively select media fragments in a file comprising alternative movie fragments, the client has to be configured for such a process. Therefore another file reading entity configured as a client according to one exemplary embodiment will now be described with reference to figure 9.

Client 900 comprises a first communication unit 901, adapted to obtain a media file from a file creating entity 700 or another content reading entity 900, typically a server. The client 900 also comprises an identifying unit 902 which corresponds to the identifying unit 902 of figure 8, and a selecting unit 903, which is configured to select from selectable fragments of the obtained media file. Selecting unit 903 is configured to select one fragment while all non-selected fragments associated with a presently processed media fragment are ignored.

Selected fragments are processed in a conventional manner by a processing unit 904, such that the content of the media file may be presented on a Graphical User Interface (GUI) 905 or any other conventional user interface and/or stored on a storing unit 905 for later presentation.

In an alternative embodiment which is not explicitly shown in the figure, client 900 may have the function of a client which merely stores the downloaded media file for later retrieval by another client. According to this embodiment the GUI 905 is replaced by conventional server functionality which enables a client to access the stored media file.

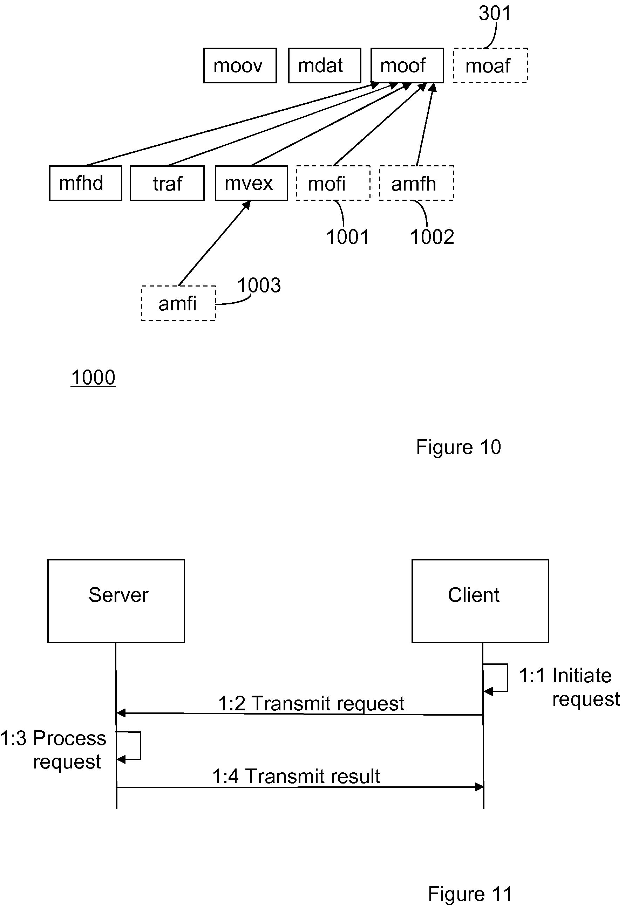

Figure 10 is a summary of boxes referred to in this document, where boxes indicated with a solid line disclose standardized boxes, while the boxes indicated with a dashed line disclose different new box types, which may be used to extend the present box structure. In figure 10, 'moov', 'mdat', and 'moof', which refer to previously known box types and 'moaf' 301 suggested in this document, disclose top-level box types which are contained directly in a file.

As indicated in the figure 'moof' may contain a number of additional boxes, of which 'mofi' 1001 and 'amfh' 1002 are new box types, which may be useful for performing any of the methods described above. In addition, the box type 'amfi' 1003 disclose another new box type, which may be contained in an 'mvex' box. Although not shown in the figure, the 'moaf' 301 box type may contain the same box types as the 'moof' boxes.

In order to also enable for a client to seek in a file where alternative movie fragments may be present as well as during downloading of a live session, the server may be adapted to signal to the client what type of file it is receiving. This may be achieved by introducing two new brands, which may be referred to e.g. as a 'live brand', which signals to a client whether or not the content of a file is live content, and an 'adaptive brand', which indicates that a file is a file that may contain adaptive content, i.e. alternative movie fragments.

The server or the file creating entity may be adapted to insert a live brand, into a file carrying live content, in order to signal to the client that seeking forward is not possible, while if adaptive brand is inserted, this is an indication to the client that seeking using byte request is not possible, due to the possibility of alternative movie fragments in the file. In case of live content, the server may also be adapted to add information to the file on how much of the file content which is available at the server, such that time shifting can be allowed.

There are situations where the time of a fragment, given either in Normal Play Time (NPT) or absolute time, may be useful to a client during HTTP streaming with progressive download.

According to one exemplary embodiment this may be achieved by adding a relevant time indication to a movie fragment box, or to an alternative movie fragment box, at a server during transmission. The described feature may be applied e.g. during seeking, such that the described time indication is provided to a client in response to a seek request, initiated by the client. The delivery of a relevant time from a server to a client may also be applied when signaling of the time for a live session is required, e.g. for allowing for storing of downloaded file content, together with relevant content time stamps, at a client.

HTTP Streaming, especially in the case of live content, adaptive content, and a combination thereof, may be improved further. There is presently a trend towards using HTTP as the main protocol for multimedia delivery. The packet-switched Streaming Service (PSS) specified by 3GPP already supports this to quite some extent by using the 3GP media file format based on ISO/IEC 14496-12:2008, Information technology-Coding of audio-visual objects-Part 12: ISO base media file format (3^{rd} Edition). 3GP files support progressive download and a specific progressive media file brand has been defined for this case, and is referred to as the progressive-download profile. This progressive media file sets requirements e.g. on interleaving depths. A typical use case is progressive download/streaming of a pre-encoded media clip.

However, it is currently not possible for a client to know whether media provided in a media file is provided as live or stored content. Not knowing whether or not provided content is live effects whether features such as the seek operation can be performed at all by the client. In addition, no procedure for how to seek in files which have been prepared for applying adaptivity is defined.

A request for the same part of a file, such as e.g. the range of 0-100000 bytes, at two different points of time may for example, depending on the link conditions at the time of seeking, result in two different encodings. As a result byte range jumps do no longer provide a competitive way of navigating in a file.

Due to the described deficiencies for known seeking procedures, it is also not possible to change codec during HTTP streaming sessions. Such changes may e.g. be particularly desirable in situations where long sessions are downloaded from a server to a client.

As already mentioned above, the Microsoft Smooth Streaming scheme requires additional files, most notable the manifest file, in addition to the ISO files. This scheme does allow for adaptation, but only client-controlled adaptation, whereas the server has no option to adapt to its present resource situation or to the transport quality that it is presently aware of.

A scheme is therefore suggested which enables a client to request a certain point of time of a media file from a server during streaming, without the client having to know at what point the movie fragments of the media file start. The suggested scheme also enables a responding server to respond to such a request by describing the point of time delivered, without being required to create movie fragments dynamically.

Figure 11 is an illustration of a scenario involving a client 1300 which is downloading a media file from a server 1200. Figure 11 schematically illustrates how a request, such as e.g. a seeking command, which is initiated at a client 1300 in a first step 1:1, is transmitted to a server 1200 in another step 1:2, and processed by the server 1200 in a subsequent step 1:3, after which the result of the processed request is delivered to the client 1300 in a final step 1:4. As a prerequisite the media file may have been adapted by a file creating entity (not shown) or the server 1200, such that it is more suitable to perform the request at the client 1300.

A URL scheme may be used by a client to request a point of time in a media file from a server, e.g. since the beginning of a presentation/file, or in the form of an NPT time. On the basis of the request, the server provides an HTTP stream starting at the requested time instance, or with the movie fragment, including the time instance, and continues forward in the file. If no RAP is contained in the movie fragment, the server may instead start sending the movie fragment with the most recent RAP.

According to one exemplary embodiment where a request is part of a URL, the request may have the following form:
http://server.com/content.3gp/npt =10.0-30.0
where the suggested request should be interpreted as a request for the NPT time interval 10.0 to 30.0 seconds. The response to such a request is advantageously placed directly in the media file, which may e.g. be achieved by using a new box type in the movie fragment describing the time of the respective fragment.

The time used in the fragment may be an absolute time, i.e. a wall clock time, or a relative time, e.g. counted from the beginning of a respective presentation. This is typically signaled by using different syntax. Another possibility it to seek backwards in time also for live content, provided that the server can provide content from a previous instance of time.

Another alternative is to put relevant parameters as part of a query-part of the URL.

In another exemplary embodiment the request may instead be an HTTP header extension which is signaled during a media file request, where the request may have the following form:

```
         GET server.com/content.3gp HTTP/1.1
         3GP-Range: ntp=12.2-
```

where the suggested request should be interpreted as a request for the NPT time 12.2 and onwards.

A response to such a request provided in a header, here referred to as 3gp-Range may look as follows:

```
         HTTP/1.1 200 OK
         3gp-Range: NPT=12.0-25.2
```

To be able to map URL's to parts of a file, one can use URL fragments. URL fragments are never sent to the server, but interpreted locally by the client. For HTTP/1.1 a fragment should be interpreted depending on the present content type. As part of the propose system, a client should interpret a fragment like e.g. #ntp=30.0-60.0 as a time range and send the corresponding range to the server by using the range header.

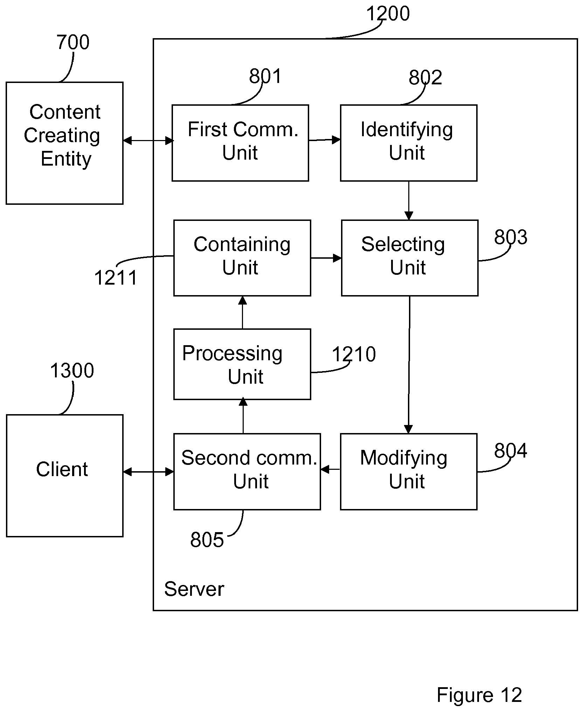

Figure 12 refers to an exemplification of a server which is further configured to enable the time of a fragment to be provided to a client. As indicated in figure 12, server 1200, comprises a processing unit 1210 which is adapted to execute a seeking operation in response to recognizing a seeking request received by the second communication unit 805.

Processing unit 1210 is connected to a containing unit 1111, which is configured to contain a response into a media file which is being downloaded to client 1300, via second communication unit 805. The relevant NPT or absolute time may be contained into a movie fragment box of the file.

Such a time box does not have to be restricted to seeking operations, but may also be used for providing time related information to the client 1300 in other situations. The processing unit 1210 may e.g. be configured to contain the time for a live session to allow for storage into a media file together with accurate content time stamps, on certain predefined conditions.

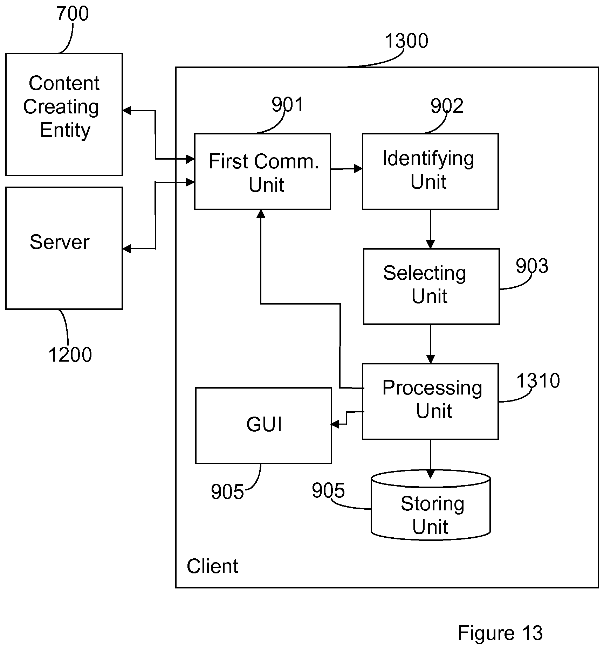

Figure 13 describes how the client of figure 9 may be provided with a processing unit 1310, which in addition to the functionality of processing unit 904 of figure 9, is further adapted to generate a seeking request and to provide such a request to server 1200.

If multiple codecs are to be applied, such that client 1300 is to be able to switch codec during a progressive download session, extra movie description boxes, 'moov' may be added to the media file by a content creating entity or by a server. In such a case the mapping between samples and movie description boxes is typically done primarily using the media file layout, such that when recognizing a new 'moov' box during the progressive download session, the selecting unit 1311 is adapted to replace the old 'moov' box with the new one, specifying the new coded, for the following samples.

An alternative mapping between movie description boxes and samples is explicit. In such a case each 'moov' box is given a specific identity by the content creating entity 700, and each 'moof' box refers to that identity. In this case change of codecs happens on a 'moof' boundary.

Advantageously, information indicating that multiple 'moov' boxes may be present in a media file is also contained into the file, whereby the selecting unit 903 of client 1300 will be able to recognize this in advance.

An alternative to using HTTP both as control and transport protocol would be to use RTSP as the session control protocol and HTTP as the transport protocol, wherein the transport may be setup by one or multiple SETUP requests provided from the client. Currently, the most used transports are RTP over UDP and RTP interleaved with RTSP over TCP. The client would instead propose an HTTP transport, and the content would then be sent as a fragmented media file as described above, but with RTSP for control of range.

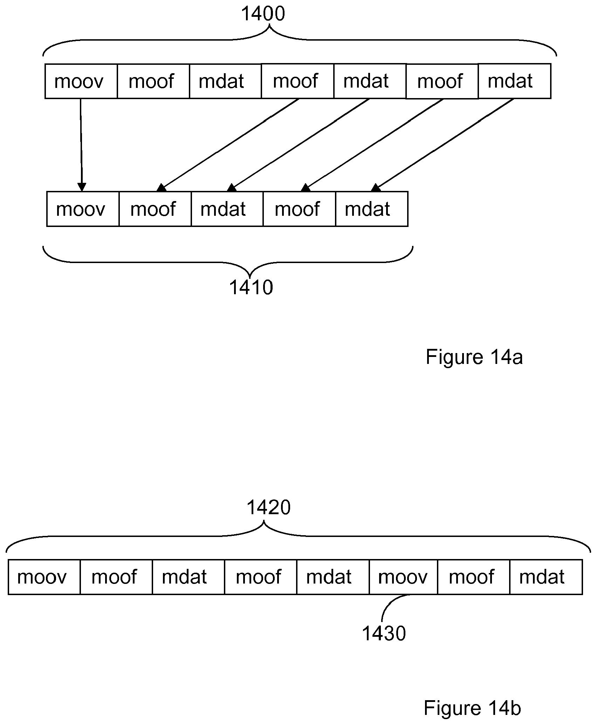

Figure 14a is an illustration of a possible result of a seek operation obtained according to any of the embodiments suggested above. A general structure of streamed content 1400 which is handled by a server, such as server 1200, may, after having received a seek request from a client, such as client 1300, provide a result corresponding to structure 1410 to client 1300.

Figure 14b is another illustration of streamed content 1420 of a media file which is adapted for change of codec, where new codec settings are contained in a second 'moov' box 1430, which is recognizable by a client 1300.

In order to simplify for the seek operation of a client 1300, additional brands, may be applied, such that the server 1200 is adapted to add appropriate brand information to a media file, and such that the client can make use of this information during seeking.

According to one example a brand, which may be referred to as a 'live brand' can be used by the server to indicate to the client that a media file is delivering live content. If a client receives such information it can thus be made aware that, because of the live content, seeking forward is not possible in the present media file.

According to another example, another brand, which may be referred to as an 'adaptive brand' a server may inform a client that a media file comprises adaptive content, and thus that seeking using byte requests will not be possible in the present media file. For live content information indicating how much of the previous content of a media file which is available at a server may also be added by the server, such that time-shifting is allowed at the client.

It is to be understood that the arrangements described in this document are described with reference to simplified configurations comprising generic units, which may be implemented in a various number of ways, such that e.g. first communication unit and a second communication unit may be configured as one single unit, which is adapted to interact with different types of entities. It is also to be understood that units which may normally be used in the present context, but which are not necessary for the understanding of the suggested concept have been omitted for simplicity reasons.

Although the suggested file generating and handling concept has been described with reference to specific exemplary embodiments and figures, the concept is not limited to the disclosed embodiments. Instead, the concept is intended to cover various modifications within the scope of the appended claims.

### ABBREVIATIONS:

- HTTP: Hypertext Transfer Protocol
- IEC: International Electro technical Commission
- ISO: International Organization for Standardization
- MPEG: Moving Picture Experts Group
- NPT: Normal Play Time
- PSS: Packet-switched Streaming Service
- RAP: Random Access Point

## Claims

1. A method in a file creating entity for creating a fragmented media file comprising a sequence of consecutive movie fragments (A, B, C, D) suitable for HTTP streaming with progressive downloading, the method comprising the following steps, executed for at least one of said movie fragments (A, B, C, D):
a) obtaining (400) media content from at least one media source; and
b) generating (401, 404) on the basis of said obtained media content, the movie fragment (A) and at least one alternative movie fragment (a1, a2), where each alternative movie fragment (a1, a2) is constituting an alternative to said movie fragment (A); and
**characterized in that** the method further comprising:
c) creating said fragmented media file by containing (402, 405) said movie fragment (A) and said at least one alternative movie fragment (a1, a2) into a respective box of a hierarchical box structure, wherein said movie fragment (A) is contained in a movie fragment box and said at least one alternative movie fragment (a1, a2) is contained in an alternative movie fragment box, wherein a file reading entity, acquiring said sequence of consecutive movie fragments (A, B, C, D), that identifies said at least one alternative movie fragment (a1, a2), and wherein the hierarchical box structure is a box structure based on an International Organization for Standardization, ISO, base media file format.

2. The method according to claim 1, wherein steps a) - c) are repeated for each movie fragment (B, C, D) for which at least one alternative movie fragment (b1, b2; c1, c2; d1, d2) is required.

3. The method according to claim 1 or 2, wherein said generating (401, 404) step comprises generating at least one attribute, constituting an indicator of differentiating criteria to be used during a selection of said movie fragment (A, B, C, D) or said alternative movie fragment (a1, a2; b1, b2; c1, c2; d1, d2).

4. The method according to claim 3, wherein during said containing (402, 405) step, said at least one attribute is contained in a movie fragment information box, which is further contained in an associated movie fragment box or the alternative movie fragment box.

5. The method according to any of claims 3 or 4, wherein during said containing (402, 405) step, a branch identity applicable for said movie fragment (A, B, C, D) or said alternative movie fragment (a1, a2; b1, b2; c1, c2; d1, d2) is contained into an alternative movie fragment header box, which is further contained in a respective movie fragment box and/or in the alternative movie fragment box.

6. A method in a file reading entity of a communication network for handling a fragmented media file comprising a sequence of consecutive default movie fragments (A, B, C, D) during HTTP streaming with adaptive progressive downloading, **characterized by** the file reading entity performing the following steps, executed for at least one of said default movie fragments (A, B, C, D):
a) receiving (500, 600), from a file creating entity, said default movie fragment (A), and at least one alternative movie fragment (a1, a2) contained in said fragmented media file, where each alternative movie fragment (a1, a2) is constituting an alternative to said default movie fragment (A) and where said default movie fragment (A) and the at least one alternative movie fragment (a1, a2) are organized in a hierarchical box structure, wherein said default movie fragment (A) is contained in a movie fragment box and the at least one alternative movie fragment (a1, a2) is contained in an alternative movie fragment box, thereby enabling adaptive selection of one of said default movie fragment and the at least one alternative movie fragment (A, a1, a2), and wherein the hierarchical box structure is a box structure based on an International Organization for Standardization, ISO, base media file format
b) identifying (501, 601) said at least one alternative movie fragment (a1, a2);
c) selecting (502, 602), one of said default movie fragment and at least one alternative movie fragment (A, a1, a2); and
d) transmitting (506, 507) or playing out (604a) and/or storing (604b) said selected fragment (A, a1, a2).

7. The method according to claim 6, wherein steps a) - d) are repeated for each default movie fragment (B, C, D) of said fragmented media file for which there is at least one alternative movie fragment (b1, b2; c1, c2; d1, d2) contained in said media fragment file.

8. The method according to claim 6 or 7, wherein the selecting (502, 602) step is performed on the basis of at least one attribute contained in said fragmented media file.

9. The method according to claim 6, 7 or 8, wherein said identifying (501, 601) step further comprises the step of consulting a table and/or a description for determining whether at least one branch is applied for said fragmented media file.

10. The method according to claim 9, wherein said table and/or description is obtained from said fragmented media file.

11. The method according to any of claims 6-10, wherein the identifying (501, 601) step further comprises the step of recognizing a sequence number of said default movie fragment and the at least one alternative movie fragment, said sequence number linking said default movie fragment (A, B, C, D) and said at least one alternative movie fragment (a1, a2; b1, b2; c1, c2; d1, d2) to each other.

12. A file reading entity (800, 900) of a communication network for handling a fragmented media file comprising a sequence of consecutive default movie fragments (A, B, C, D) during HTTP streaming with progressive downloading, the file reading entity (800, 900) comprising:
- a first communication unit (801, 901) for obtaining said fragmented media file from a file creating entity (700);
**characterized in that** the file reading entity (800, 900) further comprising:
- an identifying unit (802, 902) for identifying, for at least one of said default movie fragments (A), at least one alternative movie fragment (a1, a2), each of which is constituting an alternative to said default movie fragment (A), said default movie fragments (A) and said at least one alternative movie fragment (a1, a2) being organized in a hierarchical box structure, wherein said default movie fragment (A) is contained in a movie fragment box and said at least one alternative movie fragment (a1, a2) is contained in an alternative movie fragment box, thereby enabling adaptive selection of one of said default movie fragment (A) and said at least one alternative movie fragment (a1, a2), and wherein the hierarchical box structure is a box structure based on an International Organization for Standardization, ISO, base media file format; and
- a selecting unit (803, 903) for executing said selection.

13. The file reading entity (800, 900), according to claim 12, wherein said selecting unit (803, 903) is adapted to execute said selection on the basis of one or more of: an available bit rate; an available frame rate; a branch identity of a respective movie fragment or alternative movie fragment, and content of the file.

14. The file reading entity (900) according to any of claims 12-13, wherein said file reading entity is a client.

15. A file creating entity (700) for creating a fragmented media file, suitable for HTTP streaming with progressive downloading, which comprise a sequence of consecutive movie fragments (A, B, C, D), the file creating entity (700) comprising:
- a generating unit (701) for generating, on the basis of media content provided from at least one media source (702), a movie fragment (A) and one or more alternative movie fragment (a1, a2), where each movie fragment (a1, a2) is constituting an alternative to said movie fragment (A);
**characterized in that** the file creating entity (700) further comprising:
- a containing unit (703) for containing said generated movie fragment (A) and said one or more alternative movie fragment (a1, a2) into a hierarchical box structure, wherein said movie fragment (A) is contained in a movie fragment box and said one or more alternative movie fragment (a1, a2) is contained in an alternative movie fragment box, wherein a file reading entity (800, 900), acquiring said fragmented media file, that identifies said one or more alternative movie fragment (a1, a2) and adaptively selects one of said default movie fragment (A) and said one or more alternative movie fragment (a1, a2), and wherein the hierarchical box structure is a box structure based on an International Organization for Standardization, ISO, base media file format.

## Patentansprüche

1. Verfahren in einer Dateierstellungseinheit zum Erstellen einer fragmentierten Mediendatei, die eine Folge von aufeinanderfolgenden Filmfragmenten (A, B, C, D) umfasst, die zum Streamen mit HTTP mit progressivem Herunterladen geeignet sind, wobei das Verfahren die folgenden Schritte umfasst, die für mindestens eines der Filmfragmente (A, B, C, D) ausgeführt werden:
a) Erhalten (400) eines Medieninhalts aus mindestens einer Medienquelle; und
b) Erzeugen (401, 404) des Filmfragments (A) und mindestens eines alternativen Filmfragments (a1, a2) auf Grundlage des erhaltenen Medieninhalts, wobei jedes alternative Filmfragment (a1, a2) eine Alternative zu dem Filmfragment (A) darstellt; und
**dadurch gekennzeichnet, dass** das Verfahren ferner Folgendes umfasst:
c) Erstellen der fragmentierten Mediendatei durch Einbinden (402, 405) des Filmfragments (A) und des mindestens einen alternativen Filmfragments (a1, a2) in eine jeweilige Box einer hierarchischen Boxstruktur, wobei das Filmfragment (A) in einer Filmfragmentbox eingebunden ist und das mindestens eine alternative Filmfragment (a1, a2) in einer alternativen Filmfragmentbox eingebunden ist, wobei eine Dateileseeinheit, die die Folge von aufeinanderfolgenden Filmfragmenten (A, B, C, D) aufnimmt, das mindestens eine alternative Filmfragment (a1, a2) identifiziert, und wobei die hierarchische Boxstruktur eine Boxstruktur ist, die auf einem Basismediendateiformat der Internationalen Organisation für Normung (ISO) beruht.

2. Verfahren nach Anspruch 1, wobei die Schritte a) - c) für jedes Filmfragment (B, C, D) wiederholt werden, für das mindestens ein alternatives Filmfragment (b1, b2; c1, c2; d1, d2) benötigt wird.

3. Verfahren nach einem der Ansprüche 1 oder 2, wobei der Schritt des Erzeugens (401, 404) das Erzeugen mindestens eines Attributs umfasst, das einen während einer Auswahl des Filmfragments (A, B, C, D) oder des alternativen Filmfragments (a1, a2; b1, b2; c1, c2; d1, d2) zu verwendenden Indikator für Unterscheidungskriterien darstellt.

4. Verfahren nach Anspruch 3, wobei das mindestens eine Attribut während des Schritts des Einbindens (402, 405) in eine Filmfragmentinformationsbox eingebunden wird, die ferner in einer zugeordneten Filmfragmentbox oder der der alternativen Filmfragmentbox eingebunden ist.

5. Verfahren nach einem der Ansprüche 3 oder 4, wobei eine Zweigidentität, die auf das Filmfragment (A, B, C, D) oder das alternative Filmfragment (a1, a2; b1, b2; c1, c2; d1, d2) angewendet werden kann, während des Schritts des Einbindens (402, 405) in eine alternative Filmfragmentheaderbox eingebunden wird, die ferner in eine jeweilige Filmfragmentbox und/oder in die alternative Filmfragmentbox eingebunden ist.

6. Verfahren in einer Dateileseeinheit eines Kommunikationsnetzwerks zur Handhabung einer fragmentierten Mediendatei, die eine Folge von aufeinanderfolgenden Standardfilmfragmenten (A, B, C, D) während eines Streamens mit HTTP mit adaptivem progressivem Herunterladen umfasst, **dadurch gekennzeichnet, dass** die Dateileseeinheit die folgenden Schritte durchführt, die für mindestens eines der Standardfilmfragmente (A, B, C, D) ausgeführt werden:
a) Empfangen (500, 600) des Standardfilmfragments (A) und des mindestens einen alternativen Filmsegments (a1, a2), die in die fragmentierte Mediendatei eingebunden sind, von einer Dateierstellungseinheit, wobei jedes alternative Filmfragment (a1, a2) eine Alternative zu dem Standardfilmfragment (A) darstellt und wobei das Standardfilmfragment (A) und das mindestens eine alternative Filmfragment (a1, a2) in einer hierarchischen Boxstruktur organisiert sind, wobei das Standardfilmfragment (A) in eine Filmfragmentbox eingebunden ist und das mindestens eine alternative Filmfragment (a1, a2) in einer alternativen Filmfragmentbox eingebunden ist, wodurch eine adaptive Auswahl eines von dem Standardfilmfragment und dem mindestens einen alternativen Filmfragment (A, a1, a2) ermöglicht wird, und wobei die hierarchische Boxstruktur eine Boxstruktur ist, die auf einem Basismediendateiformat der Internationalen Organisation für Normung (ISO) beruht;
b) Identifizieren (501, 601) des mindestens einen alternativen Filmfragments (a1, a2);
c) Auswählen (502, 602) eines von dem Standardfilmfragment und dem mindestens einen alternativen Filmfragment (A, a1, a2); und
d) Übertragen (506, 507) oder Abspielen (604a) und/oder Speichern (604b) des ausgewählten Fragments (A, a1, a2).

7. Verfahren nach Anspruch 6, wobei die Schritte a) - d) für jedes Standardfilmfragment (B, C, D) der fragmentierten Mediendatei wiederholt werden, für die mindestens ein alternatives Filmfragment (b1, b2; c1, c2; d1, d2) vorhanden ist, das in die Medienfragmentdatei eingebunden ist.

8. Verfahren nach Anspruch 6 oder 7, wobei der Schritt des Auswählens (502, 602) auf Grundlage mindestens eines Attributs durchgeführt wird, das in der fragmentierten Mediendatei eingebunden ist.

9. Verfahren nach Anspruch 6, 7 oder 8, wobei der Schritt des Identifizierens (501, 601) ferner den Schritt des Heranziehens einer Tabelle und/oder einer Beschreibung zum Bestimmen, ob mindestens ein Zweig für die fragmentierte Mediendatei angewandt wird, umfasst.

10. Verfahren nach Anspruch 9, wobei die Tabelle und/oder Beschreibung von der fragmentierten Mediendatei erhalten wird.

11. Verfahren nach einem der Ansprüche 6-10, wobei der Schritt des Identifizierens (501, 601) ferner den Schritt des Erkennens einer fortlaufenden Nummer des Standardfilmfragments und des mindestens einen alternativen Filmfragments umfasst, wobei die fortlaufende Nummer das Standardfilmfragment (A, B, C, D) und das mindestens eine alternative Filmfragment (a1, a2; b1, b2; c1, c2; d1, d2) miteinander verbindet.

12. Dateileseeinheit (800, 900) eines Kommunikationsnetzwerks zur Handhabung einer fragmentierten Mediendatei, die eine Folge von aufeinanderfolgenden Standardfilmfragmenten (A, B, C, D) während eines Streamens mit HTTP mit progressivem Herunterladen umfasst, wobei die Dateileseeinheit (800, 900) Folgendes umfasst:
- eine erste Kommunikationseinheit (801, 901) zum Erhalten der fragmentierten Mediendatei von einer Dateierstellungseinheit (700) ;
**dadurch gekennzeichnet, dass** die Dateileseeinheit (800, 900) ferner Folgendes umfasst:
- eine Identifizierungseinheit (802, 902) zum Identifizieren mindestens eines alternativen Filmfragments (a1, a2), von denen jedes eine Alternative zu dem Standardfilmfragment (A) darstellt, für mindestens eines von den Standardfilmfragmenten (A), wobei die Standardfilmfragmente (A) und das mindestens eine alternative Filmfragment (A) in einer hierarchischen Boxstruktur organisiert sind, wobei das Standardfilmfragment (A) in einer Filmfragmentbox eingebunden ist und wobei das mindestens eine alternative Filmfragment (a1, a2) in einer alternativen Filmfragmentbox eingebunden ist, wodurch eine adaptive Auswahl eines von dem Standardfilmfragment (A) und dem mindestens einen alternativen Filmfragment (a1, a2) ermöglicht wird, und wobei die hierarchische Boxstruktur eine Boxstruktur ist, die auf einem Basismediendateiformat der Internationalen Organisation für Normung (ISO) beruht; und
- eine Auswahleinheit (803, 903) zum Ausführen der Auswahl.

13. Dateileseeinheit (800, 900) nach Anspruch 12, wobei die Auswahleinheit (803, 903) dazu ausgelegt ist, die Auswahl auf Grundlage eines oder mehrerer der Folgenden auszuführen: einer verfügbaren Bitrate; einer verfügbaren Bildfrequenz; einer Zweigidentität eines jeweiligen Filmfragments oder alternativen Filmfragments, und Inhalt der Datei.

14. Dateileseeinheit (900) nach einem der Ansprüche 12-13, wobei die Dateileseeinheit ein Client ist.

15. Dateierstellungseinheit (700) zur Erstellung einer fragmentierten Mediendatei, die zum Streamen mit HTTP mit progressivem Herunterladen geeignet ist und die eine Folge von aufeinanderfolgenden Filmfragmenten (A, B, C, D) umfasst, wobei die Dateierstellungseinheit (700) folgendes umfasst:
- einer Erzeugungseinheit (701) zum Erzeugen eines Filmfragments (A) und eines oder mehrerer alternativer Filmfragmente (a1, a2) auf Grundlage eines Medieninhalts, der von mindestens einer Medienquelle (702) bereitgestellt wird, wobei jedes Filmfragment (a1, a2) eine Alternative zu dem Filmfragment (A) darstellt;
**dadurch gekennzeichnet, dass** die Dateierstellungseinheit (700) ferner Folgendes umfasst:
- eine Einbindungseinheit (703) zum Einbinden des erzeugten Filmfragments (A) und des einen oder der mehreren alternativen Filmfragmente (a1, a2) in eine hierarchische Boxstruktur, wobei das Filmfragment (A) in einer Filmfragmentbox eingebunden ist und das eine oder die mehreren alternativen Filmfragmente (a1, a2) in einer alternativen Filmfragmentbox eingebunden sind, wobei eine Dateileseeinheit (800, 900), die die fragmentiert Mediendatei erfasst, die eine oder die mehreren alternativen Filmfragmente (a1, a2) identifiziert und adaptiv eines von dem Standardfilmfragment (A) und dem einen oder den mehreren alternativen Filmfragmenten (a1, a2) auswählt, und wobei die hierarchische Boxstruktur eine Boxstruktur ist, die auf einem Basismediendateiformat der Internationalen Organisation für Normung (ISO) beruht.

## Revendications

1. Procédé dans une entité de création de fichiers pour créer un fichier multimédia fragmenté comprenant une séquence de fragments de film consécutifs (A, B, C, D) utilisable pour une diffusion en continu HTTP avec téléchargement progressif, le procédé comprenant les étapes suivantes, exécutées pour au moins l'un desdits fragments de film (A, B, C, D) :
a) l'obtention (400) d'un contenu multimédia d'au moins une source multimédia ; et
b) la génération (401, 404), sur la base dudit contenu multimédia obtenu, du fragment de film (A) et d'au moins autre un fragment de film (a1, a2), où chaque autre fragment de film (a1, a2) constitue un substitut audit fragment de film (A) ; et
**caractérisé en ce que** le procédé comprend en outre :
c) la création dudit fichier multimédia fragmenté en confinant (402, 405) ledit fragment de film (A) et ledit au moins un autre fragment de film (a1, a2) dans une boîte respective d'une structure de boîte hiérarchique, dans lequel ledit fragment de film (A) est confiné dans une boîte de fragment de film et ledit au moins un autre fragment de film (a1, a2) est confiné dans une autre boîte de fragment de film, dans lequel une entité de lecture de fichiers acquiert ladite séquence de fragments de film consécutifs (A, B, C, D), qui identifie ledit au moins un autre fragment de film (a1, a2), et dans lequel la structure de boîte hiérarchique est une structure de boîte basée sur un format de fichier multimédia de base de l'Organisation internationale de normalisation, ISO.

2. Procédé selon la revendication 1, dans lequel les étapes a) à c) sont répétées pour chaque fragment de film (B, C, D) pour lequel au moins un autre fragment de film (b1, b2 ; c1, c2 ; d1, d2) est requis.

3. Procédé selon la revendication 1 ou 2, dans lequel ladite étape de génération (401, 404) comprend la génération d'au moins un attribut, constituant un indicateur de critère de différenciation à utiliser lors d'une sélection dudit fragment de film (A, B, C, D) ou dudit autre fragment de film (a1, a2 ; b1, b2 ; c1, c2 ; d1, d2) .

4. Procédé selon la revendication 3, dans lequel, au cours de ladite étape de confinement (402, 405), ledit au moins un attribut est confiné dans une boîte d'informations de fragment de film, qui est en outre confinée dans une boîte de fragment de film associé ou l'autre boîte de fragment de film.

5. Procédé selon l'une quelconque des revendications 3 ou 4, dans lequel, au cours de ladite étape de confinement (402, 405), une identité de branche applicable pour ledit fragment de film (A, B, C, D) ou ledit autre fragment de film (a1, a2 ; b1, b2 ; c1, c2 ; d1, d2) est confinée dans une autre boîte collectrice de fragment de film, qui est en outre confinée dans une boîte de fragment de film respective et/ou dans l'autre boîte de fragment de film.

6. Procédé dans une entité de lecture de fichiers d'un réseau de communication pour la gestion d'un fichier multimédia fragmenté comprenant une séquence de fragments de film par défaut consécutifs (A, B, C, D) lors d'une diffusion en continu HTTP avec téléchargement progressif adaptatif, **caractérisé par** l'entité de lecture de fichiers effectuant les étapes suivantes, exécutées pour au moins l'un desdits fragments de film par défaut (A, B, C, D) :
a) la réception (500, 600), à partir d'une entité de création de fichiers, dudit fragment de film par défaut (A) et d'au moins un autre fragment de film (a1, a2) confiné dans ledit fichier multimédia fragmenté, où chaque autre fragment de film (a1, a2) constitue un substitut audit fragment de film par défaut (A) et où ledit fragment de film par défaut (A) et l'au moins un autre fragment de film (a1, a2) sont organisés dans une structure de boîte hiérarchique, dans lequel ledit fragment de film par défaut (A) est confiné dans une boîte de fragment de film et l'au moins un autre fragment de film (a1, a2) est confiné dans une autre boîte de fragment de film, permettant ainsi la sélection adaptative de l'un dudit fragment de film par défaut et de l'au moins un autre fragment de film (A, a1, a2), et dans lequel la structure de boîte hiérarchique est une structure de boîte basée sur un format de fichier multimédia de base de l'Organisation internationale de normalisation, ISO,
b) l'identification (501, 601) dudit au moins un autre fragment de film (a1, a2) ;
c) la sélection (502, 602) de l'un dudit fragment de film par défaut et d'au moins un autre fragment de film (A, a1, a2) ; et
d) la transmission (506, 507) ou la lecture (604a) et/ou le stockage (604b) dudit fragment sélectionné (A, a1, a2).

7. Procédé selon la revendication 6, dans lequel les étapes a) à d) sont répétées pour chaque fragment de film par défaut (B, C, D) dudit fichier multimédia fragmenté pour lequel il existe au moins un autre fragment de film (b1, b2 ; c1, c2 ; d1, d2) confiné dans ledit fichier de fragment multimédia.

8. Procédé selon la revendication 6 ou 7, dans lequel l'étape de sélection (502, 602) est effectuée sur la base d'au moins un attribut confiné dans ledit fichier multimédia fragmenté.

9. Procédé selon la revendication 6, 7 ou 8, dans lequel ladite étape d'identification (501, 601) comprend en outre l'étape de consultation d'une table et/ou d'une description pour déterminer si au moins une branche est appliquée pour ledit fichier multimédia fragmenté.

10. Procédé selon la revendication 9, dans lequel ladite table et/ou description est obtenue à partir dudit fichier multimédia fragmenté.

11. Procédé selon l'une quelconque des revendications 6 à 10, dans lequel l'étape d'identification (501, 601) comprend en outre l'étape de reconnaissance d'un numéro de séquence dudit fragment de film par défaut et de l'au moins un autre fragment de film , ledit numéro de séquence reliant ledit fragment de film par défaut (A, B, C, D) et ledit au moins un autre fragment de film (a1, a2 ; b1, b2 ; c1, c2 ; d1, d2) l'un à l'autre.

12. Entité de lecture de fichiers (800, 900) d'un réseau de communication pour la gestion d'un fichier multimédia fragmenté comprenant une séquence de fragments de film par défaut consécutifs (A, B, C, D) lors d'une diffusion en continu HTTP avec téléchargement progressif, l'entité de lecture de fichiers (800, 900) comprenant :
- une première unité de communication (801, 901) pour obtenir ledit fichier multimédia fragmenté à partir d'une entité de création de fichiers (700) ;
**caractérisée en ce que** l'entité de lecture de fichiers (800, 900) comprend en outre :
- une unité d'identification (802, 902) pour identifier, pour au moins l'un desdits fragments de film par défaut (A), au moins un autre fragment de film (a1, a2), chacun constituant un substitut audit fragment de film par défaut (A), lesdits fragments de film par défaut (A) et ledit au moins un autre fragment de film (a1, a2) étant organisés dans une structure de boîte hiérarchique, dans laquelle ledit fragment de film par défaut (A) est confiné dans une boîte de fragment de film et ledit au moins un autre fragment de film (a1, a2) est confiné dans une autre boîte de fragment de film, permettant ainsi la sélection adaptative de l'un dudit fragment de film par défaut (A) et dudit au moins un autre fragment de film (a1, a2), et dans laquelle la structure de boîte hiérarchique est une structure de boîte basée sur un format de fichier multimédia de base de l'Organisation internationale de normalisation, ISO ; et
- une unité de sélection (803, 903) pour exécuter ladite sélection.

13. Entité de lecture de fichiers (800, 900) selon la revendication 12, dans laquelle ladite unité de sélection (803, 903) est conçue pour exécuter ladite sélection sur la base d'un ou de plusieurs : d'un débit binaire disponible ; d'une vitesse de trame disponible ; d'une identité de branche d'un fragment de film respectif ou d'un autre fragment de film, et du contenu du fichier.

14. Entité de lecture de fichiers (900) selon l'une quelconque des revendications 12 à 13, dans laquelle ladite entité de lecture de fichiers est un client.

15. Entité de création de fichiers (700) destinée à créer un fichier multimédia fragmenté, utilisable pour une diffusion en continu HTTP avec téléchargement progressif, qui comprend une séquence de fragments de film consécutifs (A, B, C, D), l'entité de création de fichiers (700) comprenant :
- une unité de génération (701) pour générer, sur la base d'un contenu multimédia fourni à partir d'au moins une source multimédia (702), un fragment de film (A) et un ou plusieurs autres fragments de film (a1, a2), où chaque fragment de film (a1, a2) constitue un substitut audit fragment de film (A) ;
**caractérisée en ce que** l'entité de création de fichiers (700) comprend en outre :
- une unité de confinement (703) destinée à confiner ledit fragment de film généré (A) et lesdits un ou plusieurs autres fragments de film (a1, a2) dans une structure de boîte hiérarchique, dans laquelle ledit fragment de film (A) est confiné dans une boîte de fragment de film et lesdits un ou plusieurs autres fragments de film (a1, a2) sont confinés dans une autre boîte de fragment de film, dans laquelle une entité de lecture de fichiers (800, 900) acquiert ledit fichier multimédia fragmenté, qui identifie lesdits un ou plusieurs autres fragments de film (a1, a2) et sélectionne de manière adaptative l'un dudit fragment de film par défaut (A) et desdits un ou plusieurs autres fragments de film (a1, a2), et dans laquelle la structure de boîte hiérarchique est une structure de boîte basée sur un format de fichier multimédia de base de l'Organisation internationale de normalisation, ISO.
